# EUROPEAN PATENT APPLICATION

(11) **EP 4 668 101 A1**
(43) Date of publication of application: **24.12.2025**
(21) Application number: 24766270.3
(22) Date of filing: 23.02.2024
(51) Int. Cl.: G06F 8/38

(54) **WEBIDE INSTANCE MANAGEMENT METHOD, APPARATUS AND SYSTEM**

(30) Priority: 06.03.2023 CN 202310206532; 14.07.2023 CN 202310868428
(71) Applicant: Huawei Cloud Computing Technologies Co., Ltd., Guiyang, Guizhou 550025 (CN)
(72) Inventor: ZHAN, Jing, Guiyang, Guizhou 550025 (CN); MAO, Yuanxing, Guiyang, Guizhou 550025 (CN); YU, Bin, Guiyang, Guizhou 550025 (CN)
(74) Representative: Gill Jennings & Every LLP
(86) International application number: PCT/CN2024/078437
(87) International publication number: WO 2024/183548

(57) **Abstract**

A WebIDE instance management method, apparatus, and system are provided. The system includes a web client and a WebIDE serving end. In the method, the web client receives a request triggered by a user in a first window of a WebIDE instance, where the request is used to request to display a specified object of the WebIDE instance on the web client. The web client sends the request to the WebIDE serving end. The WebIDE serving end sends a response message for the request to the web client. The web client displays a second window based on the response message, and displays the specified object in the second window. The first window and the second window are used to display a frontend page corresponding to the WebIDE instance. In this way, the user can collaboratively perform code development and debugging by using a plurality of windows of one WebIDE instance.

## Description

### CROSS-REFERENCE TO RELATED APPLICATIONS

This application claims priority to Chinese Patent Application No. 202310206532.X, filed with the China National Intellectual Property Administration on March 6, 2023 and entitled "WINDOW DISPLAY METHOD AND APPARATUS", which is incorporated herein by reference in its entirety; and this application claims priority to Chinese Patent Application No. 202310868428.7, filed with the China National Intellectual Property Administration on July 14, 2023 and entitled "WEBIDE INSTANCE MANAGEMENT METHOD, APPARATUS, AND SYSTEM", which is incorporated herein by reference in its entirety.

### TECHNICAL FIELD

This application relates to the field of computer technologies, and in particular, to a WebIDE instance management method, apparatus, and system.

### BACKGROUND

Remote work, cloud-based office, and the like are increasingly becoming essential needs, allowing programmers to utilize a web integrity develop environment (web integrity develop environment, WebIDE) technology from home for real-time code development and debugging. Generally, the backbone of the WebIDE technology involves WebIDE services running on servers and WebIDE instances for accessing the services, enabling programmers to use the WebIDE instances to write and develop code.

Currently, major vendors at home and abroad have established significant footprints within this technological sphere, examples including Microsoft's Web-based VSCode, Eclipse's Theia, AWS's Cloud9, Tencent's Cloud Studio, and Alibaba's DevStudio. With WebIDE, users can achieve an almost native IDE-like coding experience using just a browser, significantly conserving local resources. In addition, leveraging WebIDE's one-click generation capability eliminates the need for setting up compilation and debugging environments, enabling swift engagement in coding tasks. Moreover, WebIDE's ease of sharing, cross-platform compatibility, and support for multiple instances have made it highly favored among numerous developers.

However, all major mainstream WebIDEs that have been released so far only support code debugging within a single browser window.

### SUMMARY

This application provides a WebIDE instance management method, apparatus, and system, to support multi-window code debugging for a WebIDE instance.

According to a first aspect, this application provides a WebIDE instance management system. The system includes a web client and a WebIDE serving end. The web client usually runs on a user side, and the WebIDE serving end may be configured to provide a service for a WebIDE instance. The web client may display a frontend page corresponding to the WebIDE instance through a browser window, so that a user can develop and debug code online in the browser window.

In the system, a window (denoted as a first window) of the WebIDE instance may be displayed on the web client. The web client may be configured to receive a preset operation triggered by the user in the first window. The web client sends a corresponding request (denoted as a first request) to the WebIDE serving end in response to the preset operation, where the first request is used to request to display a specified object of the WebIDE instance on the web client. Correspondingly, the WebIDE serving end may be configured to: after receiving the first request, send a response message for the first request to the web client, where the response message indicates the web client to display the specified object in a second window of the WebIDE instance. Then, the web client is configured to: display the second window based on the response message, and display content of the specified object in the second window. The first window and the second window are used to jointly display the frontend page corresponding to the WebIDE instance.

According to the foregoing system, after receiving the preset operation triggered by the user for the specified object in the first window of the WebIDE instance, the web client sends the corresponding first request to the WebIDE serving end. The WebIDE serving end is configured to provide a service for the web client, for example, send the response message for the first request to the web client, where the response message may indicate the web client to open the second window of the WebIDE instance and display the content of the specified object in the second window, and both the first window and the second window belong to the WebIDE instance, and are used to jointly display the frontend page corresponding to the WebIDE instance. In other words, the WebIDE serving end in this application supports establishment of a plurality of windows of one WebIDE instance on the web client. In this way, the user can collaboratively perform, by using the plurality of windows, code development and debugging on a project loaded by a same WebIDE instance. This resolves the pain point that only single-window code debugging is supported in the existing mainstream WebIDE technology, and can greatly improve work efficiency of a programming developer.

In a possible design, the specified object includes but is not limited to one or more of the following:
(1) one or more function modules included in the frontend page corresponding to the WebIDE instance, where in other words, the second window may be used to display the one or more function modules; and
(2) one or more files included in a project loaded in the WebIDE instance, where each file includes program code, in other words, the second window may be used to display content of the one or more files.

According to the foregoing system, the WebIDE serving end supports the user in splitting, to the second window, a part of function modules in a frontend page displayed in the first window of the WebIDE instance, and/or loading, to the second window for display, a part of files in a project loaded by the WebIDE instance. This enables the user to view, edit, and debug the plurality of windows of the WebIDE instance in split-screen mode, and greatly improves the work efficiency of the programming developer.

In a possible design, the preset operation received by the web client in the first window may include one or more of the following: a drag operation performed by the user on the specified object in the first window, a click operation performed by the user on the specified object in the first window, a command entered or selected by the user in the first window, and a shortcut key operation triggered by the user. Specifically, examples are as follows: dragging the specified object displayed in the first window to a blank area outside the first window or to the second window; inputting or selecting a specified command in the first window, where the specified command indicates to display the specified object in the second window; or a specified shortcut key operation, where the shortcut key operation indicates to display the specified object in the second window. The second window may be an existing window or a new window of the WebIDE instance. Correspondingly, the request is used to request to call the second window to display the specified object.

According to the foregoing system, the window in which the frontend page corresponding to the WebIDE instance is located supports a plurality of operations of the user, to satisfy a use habit of the user, and provide convenience for the programming developer.

In a possible design, an apparatus running the web client includes a first display and a second display, and the first window is displayed on the first display. In this scenario, a drag operation may be that the user drags the specified object from the first window to a blank area of the second display. Correspondingly, the first request generated by the web client is used to: request to create (or open) a new window (namely, the second window), and display the specified object in the second window. Alternatively, in a possible design, an apparatus running the web client includes a first display, and the first display displays the first window. In this scenario, a drag operation may be dragging the specified object from the first window to a blank area of the first display. Correspondingly, the first request generated by the web client is used to: request to create (or open) a new window (namely, the second window), and display the specified object in the second window.

According to the foregoing system, in this application, the user can create the plurality of windows of the WebIDE instance in a plurality of operation manners, to satisfy a use habit of the user, and provide flexibility for the programming developer.

In a possible design, an apparatus running the web client includes a first display, and the first display displays the first window and the second window; or an apparatus includes a first display and a second display, the first display displays the first window, and the second display displays the second window. In this scenario, a drag operation may be dragging the specified object from the first window to the second window. Correspondingly, the first request generated by the web client is used to request to display the specified object in the second window.

According to the foregoing system, in this application, the user can flexibly adjust display content in two windows, to provide convenience for the programming developer.

In a possible design, the preset operation received by the web client in the first window may alternatively be receiving a code jump instruction triggered by the user in the first window, where the code jump instruction indicates to jump from a current code position (denoted as a first code position of a first file) to a target code position (denoted as a second code position of a second file). The first file and the second file may be a same file, or may be different files. Correspondingly, the first request generated by the web client is used to request to display program code corresponding to the target code position of the second file. After receiving the first request, the WebIDE serving end determines that the second file is opened in the second window (for example, it is determined by the WebIDE serving end based on a status of each window of the WebIDE instance), and sends the response message for the first request to the web client.

According to the foregoing system, multi-window interaction of the WebIDE instance in this application allows window reuse. A same file does not need to be repeatedly opened in a plurality of windows, and automatic file jumping can be implemented provided that the file is opened in one window. This provides convenience for the user, and can save network resources for repeatedly loading the file.

In a possible design, a code debugging instruction is generated during code debugging. In this case, the WebIDE serving end is further configured to: obtain, from the web client, a debugging result corresponding to running to target code (the program code corresponding to the target code position), and send indication information to the web client, where the indication information indicates to display the debugging result in the second window.

According to the foregoing system, when the code jumps to the second window, the debugging result can still be viewed in time in the second window, to satisfy a requirement of the user for performing program debugging by using a plurality of screens, satisfy a use habit of the user, and provide convenience for the user.

In a possible design, the WebIDE serving end includes a status of any window included in the WebIDE instance, and a status of each window includes at least one of an identifier of the window, a level of the window (for example, whether the window is a main window or a child window), a function module included in the window, and a file opened in the window.

The web client may further send window status information to the WebIDE serving end after displaying the second window and displaying the specified object in the second window, where the window status information includes a change of content displayed in each change window. Correspondingly, the WebIDE serving end is further configured to update a status of each change window based on the window status information.

According to the foregoing system, the WebIDE serving end supports a web browser in opening a plurality of windows of one WebIDE instance and recording a status of each window. When the web client does not specify a display window, the WebIDE serving end may independently implement the foregoing technologies such as window interaction and window reuse based on the status of each window. This helps save network resources, and satisfies a plurality of use habits of the user to collaboratively perform programming and debugging by using the plurality of windows.

In a possible design, if the preset operation does not specify a window to display the specified object, before sending the response message for the request to the web client, the WebIDE serving end is further configured to determine, based on the window status information of the WebIDE instance, that the specified object is opened in the second window, or that the specified object is not opened in the first window.

In a possible design, before the WebIDE serving end receives the first request from the web client, the web client is further configured to send a second request to the WebIDE serving end, where the second request is used to request to create a WebIDE instance. The WebIDE serving end is further configured to send, to the web client after receiving the second request, resource information used to display the frontend page corresponding to the WebIDE instance.

According to a second aspect, this application provides a WebIDE instance management method. The method may be applied to a system including a web client and a web integrity develop environment WebIDE serving end. The web client is configured to run a WebIDE instance through one or more windows. The method includes: The web client receives a preset operation triggered by a user in a first window of the WebIDE instance, where the preset operation is used to call a second window of the WebIDE instance to display a specified object of the WebIDE instance, and the first window and the second window are used to jointly display a frontend page corresponding to the WebIDE instance. The web client sends a request to the WebIDE serving end, where the request is used to request to display the specified object in the second window of the WebIDE instance. The WebIDE serving end sends a response message for the request to the client. The client displays the second window based on the response message, and displays the specified object in the second window.

The second aspect includes the method in any one of the possible designs described in the first aspect. For beneficial effects of the method in the second aspect and the possible designs of the second aspect, refer to the descriptions in the first aspect. Details are not described herein again.

According to a third aspect, this application provides another WebIDE instance management method. The method is applied to a WebIDE serving end, the WebIDE serving end is communicatively connected to a web client, the web client is configured to display a window corresponding to a WebIDE instance, and the method includes: The WebIDE serving end receives a first request from the web client, where the first request is triggered by a user in a first window of the WebIDE instance displayed on the web client, and is used to request to display specified content of the WebIDE instance; and sends a response message for the first request to the web client, where the response message indicates the web client to display the specified content in a second window of the WebIDE instance, and the first window and the second window are used to display a frontend page corresponding to the WebIDE instance.

In a possible design, before receiving the first request from the web client, the method further includes: receiving a second request from the web client, where the second request is used to request to create the WebIDE instance; and sending the frontend page corresponding to the WebIDE instance to the web client.

In a possible design, an object to which the specified content belongs includes: at least one function module included in a frontend page corresponding to the WebIDE instance, and/or at least one file loaded in the WebIDE instance, where each file includes program code.

In a possible design, the WebIDE serving end includes a status of any window included in the WebIDE instance, and a status of each window includes at least one of an identifier of the window, a level of the window, a function module included in the window, and information about a file opened in the window.

The method further includes: receiving window status information from the web client, where the window status information indicates to display a change of content displayed in each of one or more windows; and updating a status of each of the one or more windows based on the window status information.

For beneficial effects of the method in the third aspect and the possible designs of the second aspect, refer to the descriptions in the first aspect. Details are not described herein again.

According to a fourth aspect, this application further provides a WebIDE serving end. The apparatus has a function of implementing behavior of the WebIDE serving end in the system instance in the first aspect or the method instance in the second aspect or the third aspect. For beneficial effects, refer to the descriptions in the first aspect. Details are not described herein again. The function may be implemented by hardware, or may be implemented by hardware executing corresponding software. The hardware or software includes one or more modules corresponding to the foregoing functions. In a possible design, a structure of the apparatus includes a receiving module and a sending module, and optionally further includes a processing module. These modules may perform corresponding functions in the system instance in the first aspect or the method example in the second aspect or the third aspect. For details, refer to detailed descriptions in the method example. Details are not described herein.

According to a fifth aspect, this application further provides a computing device. The computing device has a function of implementing behavior of the WebIDE serving end in the system instance in the first aspect or the method instance in the second aspect or the third aspect. For beneficial effects, refer to the descriptions in the first aspect. Details are not described herein again. A structure of the computing device includes a processor and a memory. The processor is configured to support an apparatus in performing a corresponding function in the system instance in the first aspect or the method example in the second aspect or the third aspect. The memory is coupled to the processor, and stores program instructions and data that are necessary for a communication apparatus. A structure of the communication apparatus further includes a communication interface, configured to communicate with another device.

According to a sixth aspect, this application further provides a computing device cluster. The computing device cluster has a function of implementing behavior of the apparatus in the method instance in the first aspect. For beneficial effects, refer to the descriptions in the first aspect. Details are not described herein again. The computing device cluster includes at least one computing device. A structure of any computing device includes a processor and a memory. The processor in the any computing device is configured to support an apparatus in performing a part of or all functions in the first aspect and the possible implementations of the first aspect. The memory is coupled to the processor, and stores program instructions and data that are necessary for a communication apparatus. A structure of the communication apparatus further includes a communication interface, configured to communicate with another device.

According to a seventh aspect, this application further provides a computer-readable storage medium. The computer-readable storage medium stores instructions. When the instructions are run on a computer, the computer is caused to perform the method in the second aspect and the possible implementations of the second aspect, or the computer is caused to perform the method in the third aspect and the possible implementations of the third aspect.

According to an eighth aspect, this application further provides a computer program product including instructions. When the computer program product runs on a computer, the computer is caused to perform the method in the second aspect and the possible implementations of the second aspect, or the computer is caused to perform the method in the third aspect and the possible implementations of the third aspect.

According to a ninth aspect, this application further provides a computer chip. The chip is connected to a memory, and the chip is configured to read and execute a software program stored in the memory, to perform the method in the second aspect and the possible designs of the second aspect, or to cause a computer to perform the method in the third aspect and the possible implementations of the third aspect.

### BRIEF DESCRIPTION OF DRAWINGS

FIG. 1A is a diagram of a system architecture;
FIG. 1B is a diagram of a system architecture according to an embodiment of this application;
FIG. 2 is a schematic flowchart of a WebIDE instance management method according to an embodiment of this application;
FIG. 3 is a diagram of a frontend page corresponding to a WebIDE instance according to an embodiment of this application;
FIG. 4 is a diagram of a command window according to an embodiment of this application;
FIG. 5 is a diagram of an application scenario according to an embodiment of this application;
FIG. 6 is a diagram of another application scenario according to an embodiment of this application;
FIG. 7 is a schematic flowchart corresponding to Embodiment 1 according to an embodiment of this application;
FIG. 8 is a schematic flowchart corresponding to Embodiment 2 according to an embodiment of this application;
FIG. 9 is a schematic flowchart corresponding to Embodiment 3 according to an embodiment of this application;
FIG. 10 is a schematic flowchart corresponding to Embodiment 4 according to an embodiment of this application;
FIG. 11 is a diagram of a debugging window according to an embodiment of this application;
FIG. 12(a) and FIG. 12(b) are a comparison diagram of a code debugging process according to an embodiment of this application;
FIG. 13 is a diagram of a structure of a WebIDE serving end according to an embodiment of this application;
FIG. 14 is a diagram of a structure of a computing device according to an embodiment of this application;
FIG. 15 is a diagram of a structure of a computing device cluster according to an embodiment of this application; and
FIG. 16 is a diagram of a structure of another computing device cluster according to an embodiment of this application.

### DESCRIPTION OF EMBODIMENTS

For better understanding of solutions in embodiments of this application, the following first describes some related terms and concepts that may be used in embodiments of this application.
1. A web integrity develop environment (web integrity develop environment, WebIDE) is an online environment tailored for programming developers, where program codes written by the programming developers are stored in cloud, and supports breakpoint debugging, version management, team development, and the like. Compared with conventional local IDE, WebIDE offers greater speed, efficiency, and security. For example, unlike traditional setups (for example, local IDE) that require reinstallation of a development environment every time a different computer is used, WebIDE eliminates this hassle. In other words, there's no need for repeated installations or setting up a local development environment. Simply open a browser on any user device (like a PC), and immediate coding becomes possible, enabling users to engage in real-time online development swiftly and efficiently. Moreover, since codes are continuously saved in the cloud, even damage to the local computer's hard drive will not result in data loss, ensuring enhanced safety measures.
2. Local IDE is also referred to as IDE client. Different from the WebIDE, local IDE requires users to install the local IDE software on user equipment locally prior to use, all necessary project files for the users are stored on the user equipment locally, and main functions of the local IDE are provided by the IDE software installed on the user equipment locally.

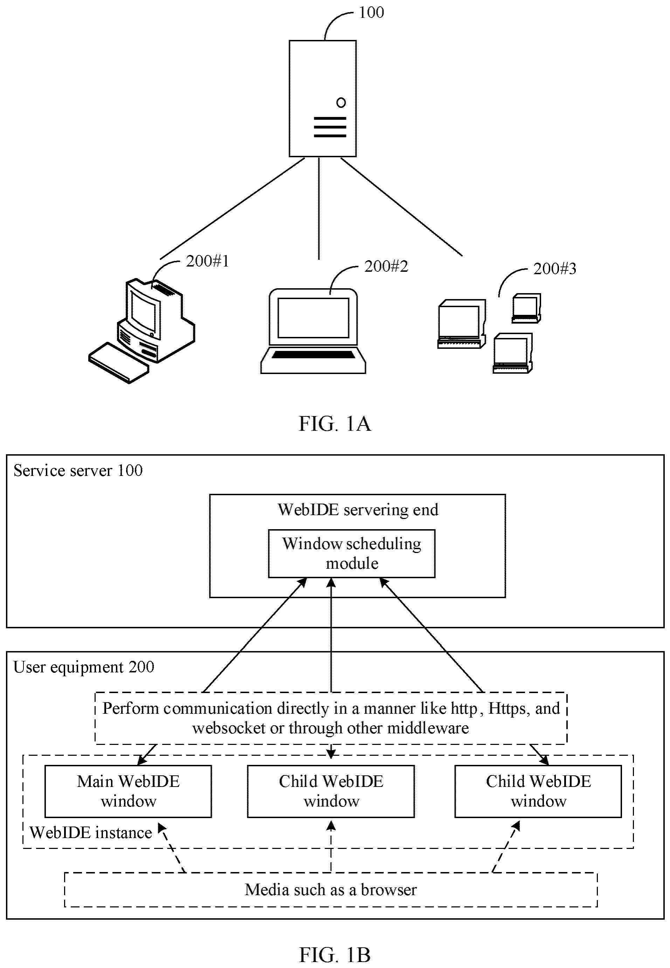

FIG. 1A is a diagram of a possible network architecture according to an embodiment of this application. The network architecture includes a service server 100 and user equipment 200. A communication connection may be established between the service server 100 and the user equipment 200. For example, a direct or indirect connection may be performed in a wired communication manner, or a direct or indirect connection may be performed in a wireless communication manner. This may be specifically determined based on an actual application scenario, and is not limited in this application.

The service server 100 may be an independent physical server, a server cluster or a distributed system including a plurality of physical servers, or a cloud server providing basic cloud computing services such as a cloud database, a cloud service, cloud computing, a cloud function, cloud storage, a network service, cloud communication, a middleware service, a domain name service, a security service, and a big data and artificial intelligence platform.

The user equipment 200 may be an intelligent terminal like a notebook computer, a tablet computer, a desktop computer, a smartphone, a palmtop computer, a mobile internet device (mobile internet device, MID), a wearable device (for example, a smartwatch or a smart band), or a smart vehicle-mounted device.

In terms of hardware, the user equipment 200 in this application may include one or more display apparatuses (for example, a display or a monitor). For example, the user equipment 200 includes a notebook computer (where the notebook computer has one display) and one or more displays externally connected to the notebook computer. For another example, the user equipment 200 includes a desktop computer and one or more displays externally connected to the desktop computer. Alternatively, the user equipment 200 in this application may be a workstation including a plurality of (two or more) user terminals having independent display apparatuses. For example, the user equipment 200 includes a notebook computer, a desktop computer, and an iPad, or the user equipment 200 includes a notebook computer, a mobile phone, and the like. This is not specifically limited. The plurality of user terminals may be connected in a wired or wireless manner, and the plurality of user terminals may implement information sharing through connection. For example, content displayed on a display of a user terminal 1 is moved to a display of a user terminal 2 for display, or content displayed on the display of the user terminal 2 is moved to the display of the user terminal 1 for display.

In terms of software, various application clients, for example, clients such as a web browser, an email client, and instant messaging client software that have a function of displaying data information such as a text, an image, an audio, and a video, may be installed on the user equipment 200. This may be specifically determined based on an actual application scenario requirement, and is not limited herein. In embodiments of this application, the application client includes an application that can load a web page, for example, a browser, a browser plug-in, or a lightweight client (or referred to as a small client) having a web page function. A browser is used as an example. The user equipment 200 may exchange data with the service server 100 through a web client, so that the service server 100 can receive service data from the user equipment 200, and display the service data through a web page window (or referred to as a browser window, which is referred to as a window for short below) provided by the web client.

The service server 100 may serve as a serving end to provide one or more service function services for a client of the user equipment 200. When providing the service function service for the application client, the serving end provides an interface, so that the client calls the interface and uses a service function service corresponding to the interface. There are various types of interfaces, for example, an account login interface, a permission authentication interface, and an information storage interface. The application client may initiate an interface request to request to call the interface provided by the serving end, for example, initiate an interface request, where the interface request carries account login information such as a user name and a password. After receiving the interface request, the serving end allows a user of the application client to log in to an account based on the account login information to access the serving end.

For example, the application client is a browser, and a WebIDE serving end is deployed in the service server 100. In a related solution, the WebIDE serving end is configured to provide a WebIDE service, for example, provide various interfaces of the WebIDE serving end and manage a WebIDE instance. A user may use a browser on the user equipment 200 to call an interface of the WebIDE serving end, to send a WebIDE instance creation request to the WebIDE serving end. The WebIDE serving end creates a WebIDE instance in response to the creation request, and then indicates the browser to display, through a window, a frontend page corresponding to the WebIDE instance. In this way, the user can perform program code writing and debugging and the like in the window. It should be noted that the WebIDE instance herein is a WebIDE access instance, and is used to provide a web programming environment for the user.

Existing major mainstream WebIDEs share a common problem that users perform code debugging only within a single browser window, and different windows load separate frontend pages of WebIDE instances. Each time users open a window, a new WebIDE instance is created, but these windows (or the WebIDE instances) lack effective interaction between them. Consequently, code developers are unable to utilize the plurality of displays on the user equipment 200 for collaborative debugging. This is very inconvenient for the programming developers, and reduces programming development efficiency.

In view of this, embodiments of this application provide a WebIDE instance management method and a system architecture to which the method is applicable. With reference to a system architecture shown in FIG. 1B, in the method, a WebIDE serving end supports a web client running on the user equipment 200 in creating a plurality of windows of one WebIDE instance (for example, a main WebIDE window and at least one child WebIDE window in FIG. 1B, where the WebIDE window is a window used to display a frontend page corresponding to the WebIDE instance, and may be referred to as a window of the WebIDE instance for short), and the plurality of windows jointly display the frontend page corresponding to the WebIDE instance. In this way, a user (for example, a programming developer) can view, write, and debug program code through the plurality of windows, to implement linkage cooperation of the plurality of windows, and improve work efficiency of the user.

Still refer to FIG. 1B. In an implementation, the WebIDE serving end may include a window scheduling module. The window scheduling module may be a hardware module, or may be a software module, or may be a module combining a software module and a hardware module. Specifically, the window scheduling module is configured to record statuses of windows of a WebIDE instance, and is responsible for managing interaction between the windows of the WebIDE instance, and the like.

It should be noted that, a common application scenario of an existing web browser, for example, an application scenario in which when a user uses a search engine of a web browser to perform a query, a query result (a web page) may be viewed in split-screen mode through a plurality of browser windows, and an application scenario in which a WebIDE instance is run in a plurality of browser windows of a web browser in this application achieve similar effects, but a difference lies in that, in the former application scenario, because there is an information association between query results displayed on two web pages, the user may manually assign an association between the two browser windows, for example, view, in split-screen mode, web pages loaded in the two browser windows, but actually, the two browser windows are still independent of each other. Although split-screen viewing is a common application scenario of the existing web browser, the problem raised in embodiments of this application cannot be resolved by referring to a technology used in the former application scenario. Viewing content of one WebIDE instance on a plurality of displays in split-screen mode is a technical effect that can be achieved by using the technology provided in this application.

The following describes a WebIDE instance management method in embodiments of this application by using an example in which the method is applied to the system architecture shown in FIG. 1B.

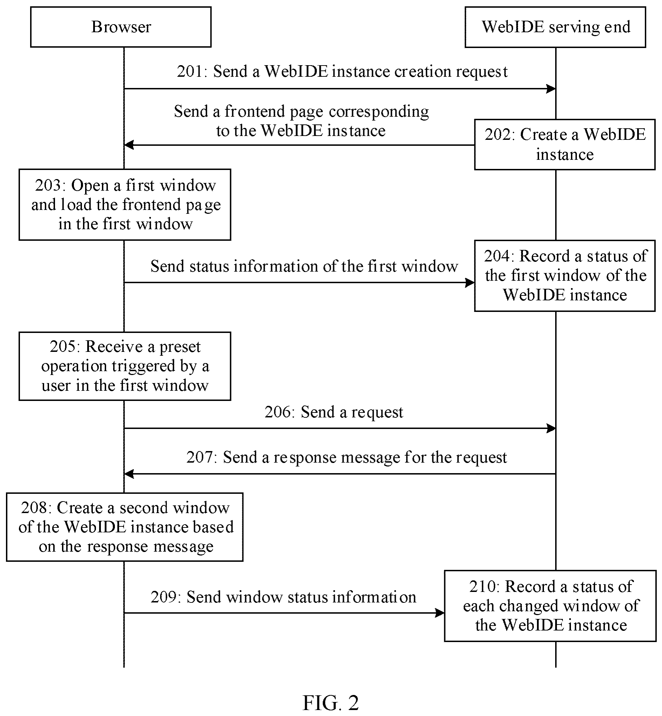

FIG. 2 is a schematic flowchart corresponding to a WebIDE instance management method according to an embodiment of this application. The method may be performed by the user equipment 200 and the service server 100 in FIG. 1B, or the method may be performed by a web client and a WebIDE serving end in FIG. 1B, or the method may be performed by a web client (or a window) and a window scheduling module deployed in a WebIDE serving end. For ease of description, the following uses an example in which the web client is a browser and the method is performed by the browser and the WebIDE serving end for description. As shown in FIG. 2, the method may include the following steps.

Step 201: The browser sends a WebIDE instance creation request to the WebIDE serving end.

The browser and the WebIDE serving end may directly or indirectly communicate with each other in a plurality of manners such as http, https, and WebSocket. This is not specifically limited.

Step 202: The WebIDE serving end creates a WebIDE instance in response to the creation request, and sends, to the browser, resource information used to display a frontend page corresponding to the WebIDE instance.

A user may control the browser to send the WebIDE instance creation request to the WebIDE serving end. For example, when the user accesses the WebIDE serving end through the browser for the first time, the creation request may be triggered. The WebIDE serving end sends, to the browser after creating the WebIDE instance in response to the creation request, the resource information used to display the frontend page corresponding to the WebIDE instance. The browser loads the frontend page corresponding to the WebIDE instance in a window based on the resource information, and loads, on the frontend page, files of one or more projects belonging to the user. These files may be stored on a device like the WebIDE serving end or a cloud, and are obtained by the WebIDE serving end and sent to the browser for display. Content of these files is usually program code written by the user for the project. Then, the user may perform operations such as viewing, writing, and modifying on the program code displayed on the frontend page. In embodiments of this application, a plurality of windows may be opened in one WebIDE access instance to display a frontend page corresponding to the WebIDE access instance.

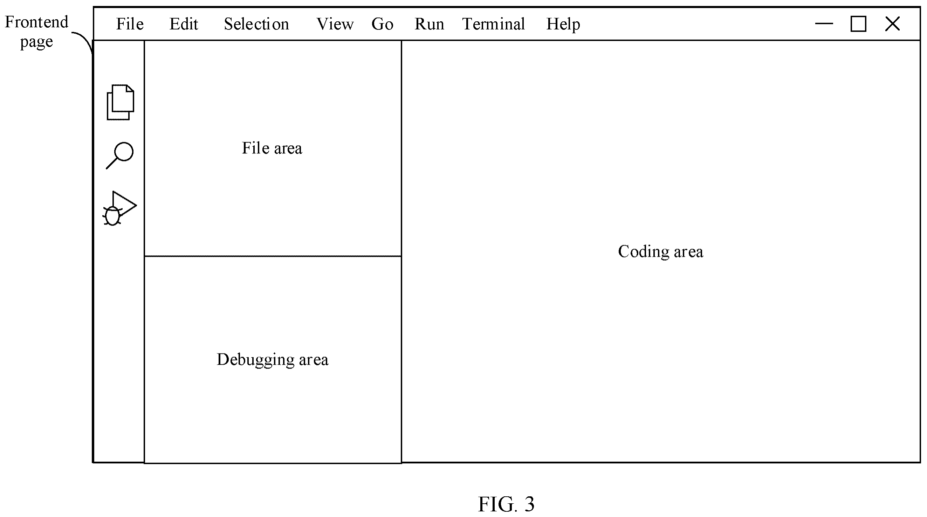

FIG. 3 is a diagram of a frontend page corresponding to a WebIDE instance. The frontend page corresponding to the WebIDE instance is mainly used to provide a window for writing program code. As shown in FIG. 3, the frontend page is used to provide various function modules related to program code writing, for example, including but not limited to one or a combination of a menu bar, a file bar, a coding area, a debugging area, and the like. The function modules are described as follows:

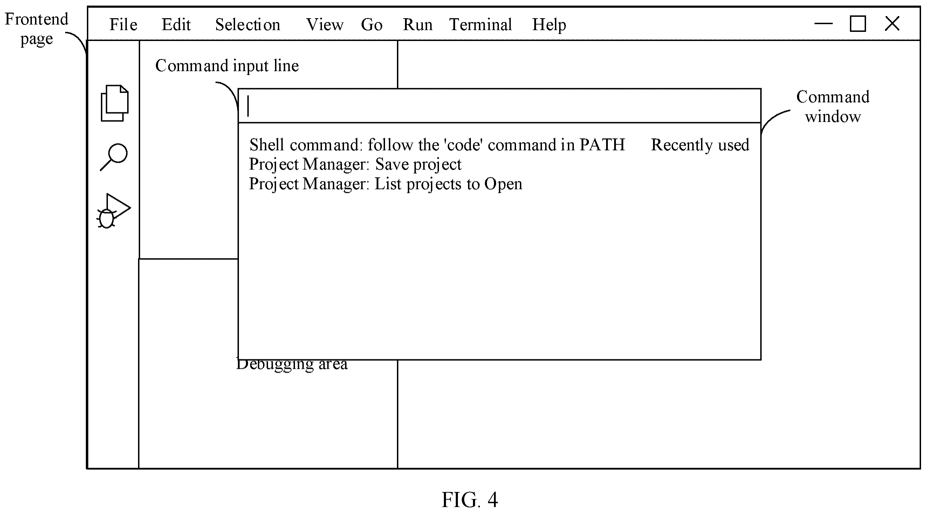

The menu bar is usually a tree structure and provides entries for most functions of software. The menu bar may include a plurality of menu items. As shown in FIG. 4, in embodiments, the menu item mainly includes a command entry. The user selects a command entry option in the menu bar, and a command window is displayed. The user may enter a command or select a historical command in the command window. For example, the command is to open a file or trigger a function (for example, start debugging). This is not specifically limited.

The file bar is used to display a file directory (or file tree) of a project loaded by the WebIDE instance. The user may select a file in the file directory and choose to open the file. It may be understood that these files may be created by the user (for example, a programming developer). These project files usually include program code written by the user for the project, or may include an open source file downloaded or imported by the user from another device (for example, the cloud). This is not specifically limited. Certainly, in addition to an operation of opening a file, the user may perform another operation on the file bar, for example, creating a file, deleting a file, dragging a file, or moving a file. This is not specifically limited.

The coding area is a readable and writable area, and may be used to display an opened file, content (for example, program code) of the opened file, program code that is entered and edited by the user in the opened file, and the like.

The debugging area includes a debugging module and a debugging result display area. The debugging module is configured to start a code debugging program, and the debugging result display area is used to display a debugging result like a debugging status and a value of a variable that are determined during debugging. The debugging module may support a plurality of existing debugging manners such as single-step debugging and breakpoint debugging. For details, refer to descriptions of the existing debugging manners. Details are not described herein.

It should be noted that the frontend page shown in FIG. 3 is merely an example. In actual application, the frontend page corresponding to the WebIDE instance may have more or fewer function modules than those in FIG. 3, or the function modules have different display manners. A function module included in the frontend page corresponding to the WebIDE instance and a layout position of each function module are not limited in embodiments of this application. In addition, it should be noted that the function module in embodiments may further include a control (for example, the debugging module) in each area described above, and any object that can be moved on the frontend page may be used as a function module.

Step 203: The browser opens (or creates) a window (denoted as a first window), and loads, in the first window based on the resource information, the frontend page corresponding to the WebIDE instance.

In an implementation, the WebIDE serving end sends the frontend page corresponding to the WebIDE instance to the browser, and the browser opens the first window and loads the frontend page by using the first window. The window into which the frontend page corresponding to the WebIDE instance is loaded may also be referred to as a WebIDE window or a window of the WebIDE instance. In the following, a plurality of windows of one WebIDE instance may be further distinguished by using adverbials such as "first", "second", and "third".

In embodiments of this application, a plurality of windows of one WebIDE instance can be created. The plurality of windows may be divided into a main WebIDE window (referred to as a main window below) and a child WebIDE window (referred to as a child window below). The main window is responsible for a main service of a WebIDE, and the child window is responsible for a part of services related to displayed content. In an implementation, the main window may be a window into which the frontend page corresponding to the WebIDE instance is first loaded after the browser requests the WebIDE serving end to create the WebIDE instance. For example, the first window in step 203 is the main window, and one or more windows that are created after the first window and that belong to the WebIDE instance are all child windows. It may be understood that the child window may be used to share a part of display content of the main window.

It should be understood that content displayed in the main window and the child window is not fixed. For example, after the frontend page shown in FIG. 3 is loaded in the main window, the user may perform an operation like opening a file or editing program code in the main window. In this case, content displayed in the main window may vary with the operation of the user. For another example, when a part of function modules in the main window are moved out to the child window for display, content displayed in both the main window and the child window changes.

Step 204: The WebIDE serving end records a status of the first window of the WebIDE instance.

This step may include the following: The browser sends, to the WebIDE serving end, an indication message indicating that the first window is successfully created, and the WebIDE serving end records the status of the first window based on the indication message. In an example, the indication message includes an identifier of the first window and information indicating opened content in the first window. The status of the first window may include but is not limited to at least one of the following: an identifier of the first window, a level of the first window (the level indicates whether the window is the main window or the child window), and opened content in the first window, for example, a function module loaded in the first window and an opened file.

The identifier of the first window may be generated by the WebIDE serving end, and is generated and sent to the browser by the WebIDE serving end in step 202; or the identifier of the first window is generated by the browser, and is carried in the indication message and sent to the WebIDE serving end. This is not specifically limited.

Step 205: The browser receives a preset operation triggered by the user for a specified object in the first window.

Step 206: The browser sends a request to the WebIDE serving end in response to the preset operation, where the request is used to request to display the specified object in a manner indicated by the preset operation.

The specified object in embodiments includes but is not limited to one or more of the following: at least one function module included in the frontend page corresponding to the WebIDE instance, and at least one file loaded in the WebIDE instance.

In embodiments, the preset operation may be one or a combination of a plurality of operations such as a dragging operation, a clicking operation, a command operation, and a shortcut key operation. The following separately provides descriptions.
(1) The preset operation includes a drag operation.

In an example, the preset operation may be dragging the specified object in the first window to an area (denoted as a blank area) outside the first window.

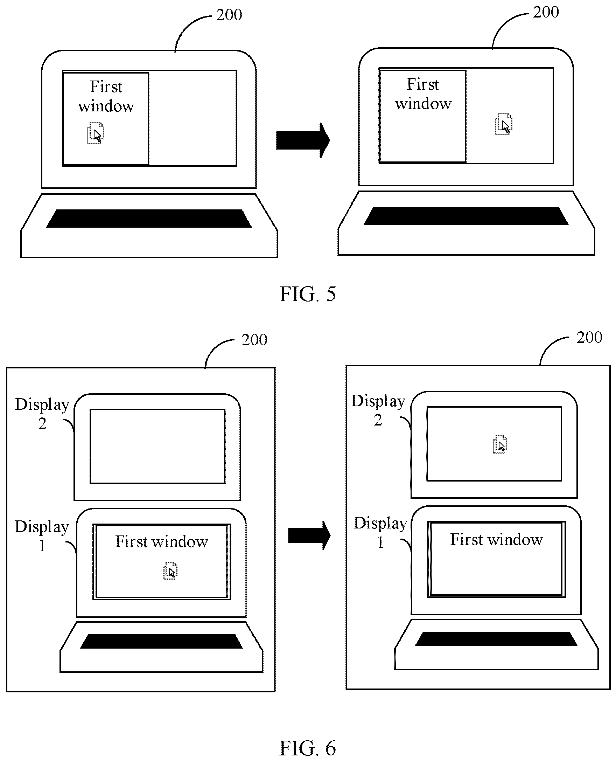

As shown in FIG. 5, in a scenario, the user equipment 200 includes only one display (denoted as a display 1), the first window may be displayed in a partial area of the display 1, and the remaining area is a blank area (regardless of whether content is displayed, the remaining area is referred to as a blank area). The preset operation may be that the user drags a function module (for example, the debugging area) or a specified file (which may be a file in the file bar or an opened file in the coding area of the first window) in the first window to the blank area outside the first window in the display 1. In this case, the preset operation is used to call a new window (denoted as a second window) to display the function module or content of the file. For example, a file A is used as an example. The drag operation may be as follows: The user selects the file A in the file bar of the first window by using a mouse, holds down a mouse button, moves the mouse to drag the selected file A to the blank area of the display 1, and releases the mouse button to release the file A in the blank area. In this case, a user intent of the preset operation is to create a new child window of the WebIDE instance, open the file A in the new child window, and display content of the file A. Correspondingly, a request generated based on the preset operation is used to request to create the new child window of the WebIDE instance, open the file A in the new child window, and display the content of the file A.

As shown in FIG. 6, in another scenario, the user equipment 200 includes a plurality of displays, for example, a display 1 and a display 2. The first window may be displayed on any one of the displays, for example, the display 1. In this case, the display 2 does not display any window of the WebIDE instance. The preset operation may be that the user drags a function module or a file in the first window to the display 2. In this case, the preset operation is used to call a new window (denoted as a second window) to display the function module or content of the file. For details, refer to the foregoing related descriptions of the example in FIG. 5. Details are not described herein again. A difference between the two scenarios shown in FIG. 5 and FIG. 6 lies in that, in FIG. 5, the second window is displayed on the display 1, specifically, for example, a blank area of the display 1, and in FIG. 6, the second window is displayed on the display 2. This better meets the user intent.

In the foregoing scenario, if the WebIDE instance includes another window in addition to the first window, for example, after the second window is created, the preset operation may further include dragging the specified object from one window of the WebIDE instance to another window of the WebIDE instance, for example, the preset operation is dragging the specified object from the first window to the second window, correspondingly, the request generated based on the preset operation is used to request to display content of the specified object in the second window, or if the specified object is displayed and opened in the first window, the request may alternatively be used to request to close the specified object displayed in the first window, and display the content of the specified object in the second window.

Alternatively, the preset operation is dragging the specified object from the second window to the first window. Correspondingly, the request generated based on the preset operation is used to request to display the content of the specified object in the first window, or if the specified object is displayed and opened in the second window, the request may alternatively be used to request to close the specified object displayed in the second window, and display the content of the specified object in the first window.

(2) The preset operation includes that the user enters or selects a specified command.

With reference to FIG. 4, it may be understood that the preset operation may be that the user enters or selects a specified command in a command window called from the first window, and the specified command indicates to move a function module in the first window to the second window (the function module is no longer displayed in the first window), or the specified command indicates to display a function module in the second window (the function module is still retained in the first window), or the specified command indicates to move an opened file in the first window to the second window (the file is no longer opened in the first window), or the specified command indicates to open a file in the second window, or the like. The second window indicated in the command may be a new window or an existing window. This is not specifically limited.

If the second window is a new window, the request generated based on the preset operation is used to request to create a new child window of the WebIDE instance, and display the content of the specified object in the new child window.

If the second window is an existing window of the WebIDE instance, the request generated based on the preset operation is used to request to display the content of the specified object in the second window.

(3) The preset operation includes a specified shortcut key operation.

The preset operation may alternatively be a specified shortcut key operation triggered by the user by using an input device like a keyboard.

In an example, the specified shortcut key operation may be implemented based on the first window. For example, a shortcut key operation (denoted as a shortcut key 1) is used to call a command window of the first window, and then a shortcut key operation (denoted as a shortcut key 2) is used to select or enter the specified command described above in the command window. Correspondingly, for the generated request, refer to the foregoing descriptions. Details are not described herein again.

In another example, the shortcut key operation does not need to be implemented based on the first window. For example, a shortcut key operation (denoted as a shortcut key 3) is used to move a specified object in the main window to the second window. For another example, a shortcut key operation (denoted as a shortcut key 4) is used to display a specified object (for example, open a file) in the second window, and the like. Correspondingly, for the generated request, refer to the foregoing descriptions. Details are not described herein again.

It should be understood that different user intents should be distinguished by using different shortcut key operations. For example, the shortcut key 1 is ctrl+F1, the shortcut key 2 is ctr1+F2, the shortcut key 3 is ctrl+F3, and the shortcut key 4 is ctrl+F4. This is merely an example for description herein, and is not specifically limited.

Further, the preset operation may include a combination of the foregoing plurality of operations. For example, the preset operation includes the foregoing shortcut key 1 and entering or selecting a specified command by the user in a command window. This is not specifically limited.

It should be noted that the foregoing listed preset operations are merely examples for description. The preset operation applicable to embodiments of this application may alternatively be another user operation, for example, an operation of triggering a code jump instruction. This is not limited in embodiments of this application. Any operation of indicating to call a new window to display the specified object, or indicating to display the specified object in an existing window, or indicating to move the specified object in two windows is applicable to embodiments of this application.

Step 207: After receiving the request, the WebIDE serving end sends a response message for the request to the browser.

After receiving the request, the WebIDE serving end generates the response message to the request. The following describes content of the corresponding response message based on a request type.

In conclusion, the request generated based on the preset operation in embodiments includes the following types:
(1) The request is used to request to open a new window of the WebIDE instance and display the specified object in the new window.

For example, the request may include but is not limited to one or more of the following information: a creation indication, information indicating the WebIDE instance, information indicating the specified object (for example, if the specified object is a file, the information may be a file identifier like a file name, a file path, or a file handle; or if the specified object is a function module, the information may be an identifier of the function module), and an identifier of a new child window. The creation indication indicates to create a new child window.

Correspondingly, the response message indicates the browser to create a new window of the WebIDE instance and display the specified object in the new window.

Optionally, before generating the response message, the WebIDE serving end may further determine whether the specified object has been opened in an existing window (for example, the first window) of the WebIDE instance. If the specified object has been opened, the response message may further indicate to close the specified object that has been opened in the existing window of the WebIDE instance, create a new window of the WebIDE instance, and display the specified object in the new window.

(2) The request is used to request to call an existing window of the WebIDE instance to display the content of the specified object.

For example, the request may include but is not limited to one or more of the following information: information indicating the WebIDE instance, information indicating the specified object, and an identifier of the existing window.

Correspondingly, the response message indicates the browser to display the content of the specified object in the existing window (for example, the second window) of the WebIDE instance.

Optionally, before generating the response message, the WebIDE serving end may further determine whether the specified object has been opened in another existing window (for example, the first window) of the WebIDE instance. If the specified object has been opened, the response message may further indicate to close the specified object that has been opened in the first window of the WebIDE instance, and display the content of the specified object in the second window of the WebIDE instance.

(3) The request is used to request to move the specified object from the first window of the WebIDE instance to the second window.

When the second window is a new child window, in addition to the foregoing information of the type (1), the request may include a closing indication, and the closing indication indicates to close the specified object in the first window. Correspondingly, the response message indicates the browser to close the specified object in the first window of the WebIDE instance, create a new window of the WebIDE instance, and display the content of the specified object in the new window.

Alternatively, when the second window is an existing window, in addition to the foregoing information of the type (2), the request may include a closing indication, and the closing indication indicates to close the specified object in the first window. Correspondingly, the response message indicates the browser to close the specified object in the first window of the WebIDE instance, and display the content of the specified object in the second window.

(4) The request is used to display the specified object, and a window used to display the specified object is not specified.

The WebIDE serving end may randomly select a window from existing child windows of the WebIDE instance, and indicate, by using the response message, to display the content of the specified object in the selected window. Alternatively, the WebIDE serving end may select a default window (for example, the main window) of the user based on a setting, and indicate, by using the response message, to display the content of the specified object in the default window.

Alternatively, the WebIDE serving end may select, based on an operation record of the user, a window in which the user performs a previous operation or a window in which the preset operation is triggered this time, and indicate, by using the response message, to display the content of the specified object in the window.

Optionally, if the WebIDE serving end determines that the specified object has been opened in another existing window of the WebIDE instance, and the existing window is different from a window that is selected by the WebIDE serving end to display the specified object, in addition to indicating the foregoing content, the response message may indicate to close the specified object that has been opened in the another window.

In the foregoing description, the WebIDE serving end may determine, based on status information of the WebIDE instance, whether the specified object is opened in the existing window. The status information of the WebIDE instance is described in detail below. Details are not described herein.

Step 208: The browser displays the second window of the WebIDE instance based on the response message, and displays the specified object in the second window.

Step 209: The browser sends window status information to the WebIDE serving end, where the window status information includes information about a changed window of the WebIDE instance, and the information indicates a change of content displayed in the window.

It should be noted that step 209 is an optional step instead of a mandatory step. For example, the WebIDE serving end may alternatively update, based on the response message, a status of each changed window of the WebIDE instance.

Step 210: The WebIDE serving end updates the status of each changed window of the WebIDE instance.

The WebIDE serving end stores the status information of the WebIDE instance, where the status information indicates a mapping relationship between the main window and the child window of the WebIDE instance and a status of each window of the WebIDE instance, and the status of each window includes content displayed in the window. Table 1 shows an example of the status information according to embodiments of this application.

**Table 1**

| Window identifier | Window level | Content displayed in the window |
|---|---|---|
| Identifier of the first window | Main | Menu bar, file area, debugging area, coding area, file A, and file B |
| Identifier of the second window | Child | Coding area and file C |
| ... | ... | ... |

The following uniformly describes step 208 to step 210 by using specific examples.

In an implementation, the preset operation indicates to create a new child window. Correspondingly, the response message may indicate that the new window, for example, the second window, of the WebIDE instance is allowed to be opened. In step 208, the browser opens a new window, namely, the second window, based on the response message, and after the second window is successfully created, the browser sends, to the WebIDE serving end, an indication message indicating that the second window is successfully created. In an example, the indication message includes one or more of the following: information indicating the WebIDE instance, an identifier of the first window, an identifier of the second window, and opened content in the second window (in this case, the content is blank, in other words, no content of the WebIDE instance is displayed). In step 210, the WebIDE serving end records a status of the second window based on the indication information (refer to the foregoing description of recording the status of the first window, and details are not described herein again), and updates the mapping relationship between the main window and the child window of the WebIDE instance, where the mapping relationship indicates a main window and a child window included in one WebIDE instance. For example, the mapping relationship includes the identifier of the first window and the identifier of the second window, and indicates that the first window is the main window and the second window is the child window.

In another implementation, the preset operation indicates to display the specified object in the new window. Correspondingly, the response message may indicate to open the new window of the WebIDE instance. In step 208, the browser opens the new child window (denoted as the second window) of the WebIDE instance based on the response message. After the second window is successfully created, the browser sends, to the WebIDE serving end, an indication message indicating that the second window is successfully created (content included in the indication message is not limited). Then, the WebIDE serving end sends the content of the specified object to the browser. The browser receives the content of the specified object, and displays the content of the specified object in the second window. The specified object may be moved out from the first window, or may be newly opened. Optionally, the WebIDE serving end may further record the status of the second window, and update the mapping relationship between the main window and the child window of the WebIDE instance. In step 209, the browser sends the window status information to the WebIDE serving end, where the window status information includes one or more of the following: the information indicating the WebIDE instance, the identifier of the first window, the identifier of the second window, the opened content in the first window (or information indicating a change of the first window), and the opened content in the second window (in this case, the specified object has been loaded). In step 210, the WebIDE serving end updates, based on the window status information, a status of a changed window (for example, the second window, and optionally, the first window) and the mapping relationship between the main window and the child window of the WebIDE instance. It should be noted that, if the specified object is moved from the first window to the second window, the second indication message may further include a change of the first window. Correspondingly, the WebIDE serving end further needs to update the status of the first window.

In still another implementation, the preset operation indicates to display the specified object in the new child window. Correspondingly, the response message indicates to open the new child window (denoted as the second window) of the WebIDE instance and load the specified object in the second window. In step 208, the browser creates the second window, receives the content of the specified object from the WebIDE serving end, and displays the content of the specified object in the second window after the second window is successfully created. The specified object may be moved out from the first window, or may be obtained from the WebIDE serving end. In step 209, the browser sends the window status information to the WebIDE serving end, where the window status information may include one or more of the following: the information indicating the WebIDE instance, the identifier of the first window, the identifier of the second window, loaded content in the first window (or the information indicating the change of the first window), and loaded content in the second window (in this case, the specified object has been loaded). In step 210, the WebIDE serving end updates, based on the second indication message, the status of the changed window and the mapping relationship between the main window and the child window of the WebIDE instance.

The foregoing describes a procedure of creating the two windows of the WebIDE instance. Optionally, after this, more child windows of the WebIDE instance may be further created in the browser. This is not limited in this application, and a subsequent procedure is not described again. In addition, it should be noted that the child window described above is to display a part of content of the main window. An objective of this practice is to save resources and simplify programming and debugging complexity. The child window usually loads a lightweight frontend page. Certainly, in embodiments of this application, a frontend page loaded by the child window may be the same as a frontend page loaded by the main window. It should be understood that "same" herein means that function modules included in the frontend page are the same, but content displayed in the main window and the child window may be different.

According to the foregoing design, in embodiments of this application, a plurality of windows can be created for one WebIDE instance, and a frontend page corresponding to the WebIDE instance can be displayed in each of the plurality of windows. In this case, the user may drag different windows to different displays to read, code, and debug program code of a same project on split screens, or display the plurality of windows in parallel on one display to perform these operations, and perform code debugging through linkage cooperation of the plurality of windows, instead of only performing code debugging by the user in a single window. This can greatly improve work efficiency of a programming developer.

With reference to the solution shown in FIG. 2, the following lists several embodiments corresponding to the WebIDE instance management method provided in embodiments of this application.

### Embodiment 1:

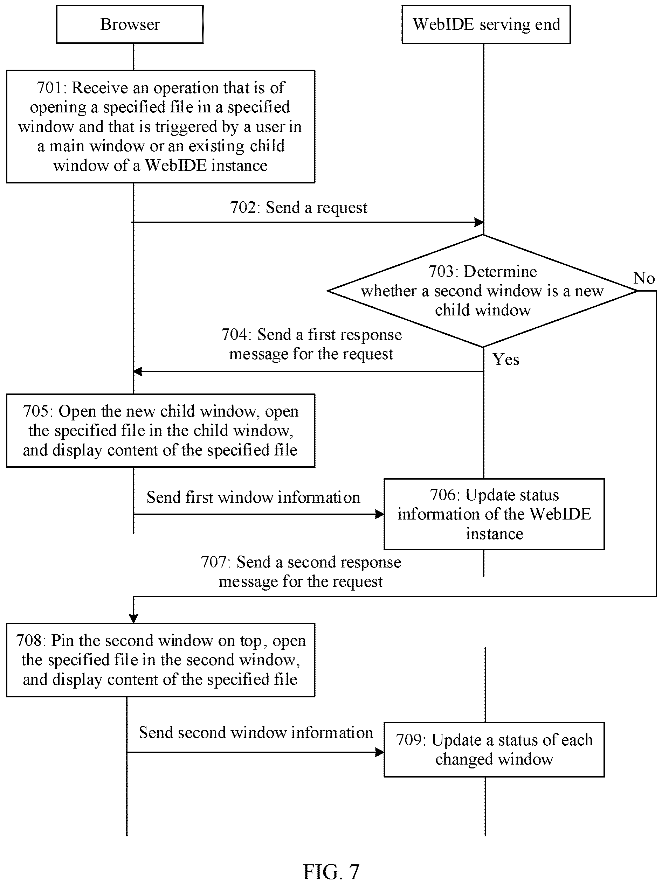

FIG. 7 is a schematic flowchart corresponding to Embodiment 1. As shown in FIG. 7, the procedure may include the following steps.

Step 701: A browser receives an operation that is of opening a specified file in a specified window (for example, a second window) and that is triggered by a user in a main window or an existing child window (for example, may be collectively referred to as a first window) of a WebIDE instance.

The second window may be the main window, the existing child window, or a new child window. In other words, the first window and the second window may be a same window, or may be different windows.

For example, a display 1 displays a main window and a child window 1, or a display 1 displays a main window, and a display 2 displays a child window 1. The operation may include: dragging an opened file in the main window to the child window 1, dragging an opened file in the child window 1 to the main window, dragging a selected file in a file bar of the main window to the child window 1, or dragging a selected file in a file bar of the child window 1 to the main window.

For another example, a display 1 displays a child window 1 and a child window 2, or a display 1 displays a child window 1, and a display 2 displays a child window 2. The operation may further include: dragging an opened file in the child window 1 to the child window 2, dragging an opened file in the child window 2 to the child window 1, dragging a selected file in a file bar of the child window 1 to the child window 2, or dragging a selected file in a file bar of the child window 2 to the child window 1. The main window may be stacked under a child window, or may be located in a partial area of a display.

It should be noted that the operation in step 701 may alternatively be a preset operation triggered by using a shortcut key or a command, or in another manner. For details, refer to the foregoing descriptions of the preset operation. Details are not described herein again.

Step 702: The browser sends a request to a WebIDE serving end in response to the operation.

Step 703: After receiving the request, the WebIDE serving end determines whether the second window is a new child window; and if yes, perform step 704; otherwise, perform step 707.

In an example, when the request includes a creation instruction, the WebIDE determines to open the specified file in the new child window.

In another example, when the request includes an identifier of a specified window, the WebIDE serving end may determine, based on status information of the WebIDE instance, whether the specified window is an existing window of the WebIDE instance, to determine whether to open the specified file in the new child window.

Step 704: The WebIDE serving end sends a first response message for the request to the browser, where the first response message indicates the browser to open the second window and load the specified file in the second window.

Step 705: The browser opens the new child window (namely, the second window), opens the specified file in the second window, and displays content of the specified file.

Step 706: The WebIDE serving end updates the status information of the WebIDE instance.

Specifically, that the WebIDE serving end updates the status information of the WebIDE instance includes: setting the second window as a child window, and recording a status of the second window. Optionally, when the specified file is moved out from the first window, the specified file in the first window further needs to be closed. In this case, content displayed in the first window also changes. Therefore, that the WebIDE serving end updates the status information of the WebIDE instance further includes updating a status of the first window.

Step 707: The WebIDE serving end sends a second response message for the request to the browser, where the second response message indicates the browser to pin the second window on top and load the specified file in the second window.

Step 708: The browser pins the second window on top, opens the specified file in the second window, and displays content of the specified file.

It should be noted that, that the browser pins the specified window on top is an optional step, and is not necessarily performed. For example, when the specified window is already in a top position, the browser does not need to perform the operation. In addition, it should be noted that, in step 705 or step 708, if the specified file is moved out from an existing window, that is, the specified file is opened in the existing window (for example, the main window), the specified file opened in the main window further needs to be closed.

Step 709: The WebIDE serving end updates a status of each changed window.

For step 702, refer to related descriptions of step 206. For step 704 to step 706, refer to related descriptions of step 207 to step 210. For step 709, refer to related descriptions of step 210. Details are not described herein again.

According to the foregoing design, in this embodiment of this application, the user can display a plurality of files of one project in different windows. The plurality of windows may be viewed in parallel on one display, or the plurality of windows may be viewed on a plurality of displays in split-screen mode. In this case, the user may read, modify, and write program code by combining the files displayed in the plurality of windows. For example, the user may simultaneously view program code loaded in the plurality of windows. This greatly improves work efficiency of a program developer.

### Embodiment 2:

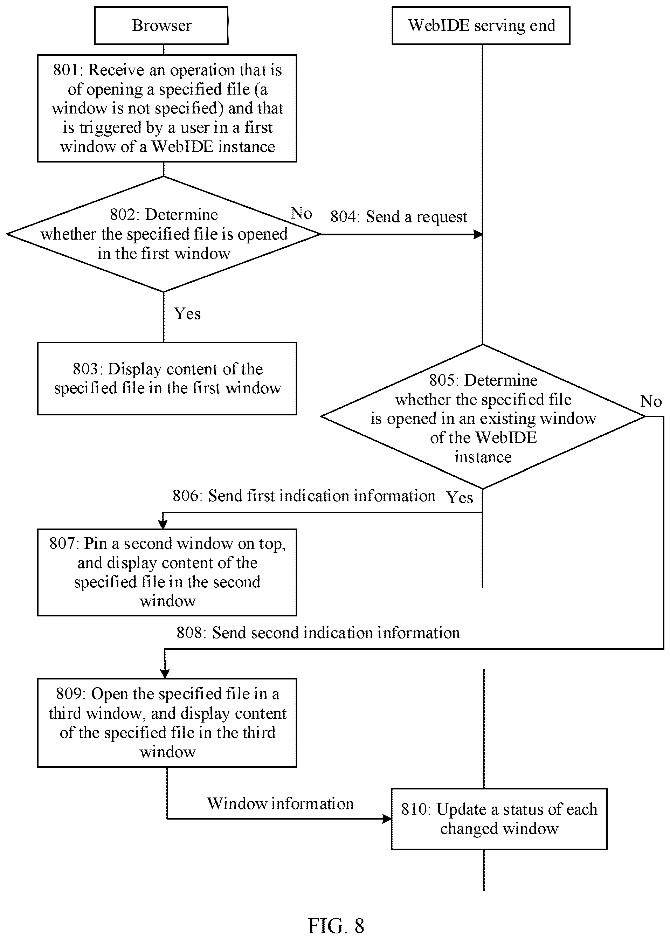

FIG. 8 is a schematic flowchart corresponding to Embodiment 2. As shown in FIG. 8, the procedure may include the following steps.

Step 801: A browser receives an operation that is of opening a specified file (a window is not specified) and that is triggered by a user in a main window or an existing child window (collectively referred to as a first window) of a WebIDE instance.

For example, the user clicks a file in a file bar of the main window, and the user intends to open the file and does not specify a window for opening the file.

Step 802: The browser determines whether the specified file is opened in the first window; and if yes, performs step 803; otherwise, performs step 804.

Specifically, a function module configured to manage a project file in the first window running on the browser may perform determining. For example, the function module caches information about a file that has been opened in the first window. In this case, the function module may determine, based on the cached information, whether the specified file is opened in the first window.

It should be noted that step 802 is an optional step, and is not necessarily performed. For example, in some cases, in this embodiment, step 802 may be skipped, and step 804 is directly performed. That is, a WebIDE serving end performs determining.

Step 803: The browser displays content of the specified file in the first window.

Step 804: The browser sends a request to the WebIDE serving end, where the request includes related information of the specified file, and the request is used to request to display the content of the specified file.

Step 805: The WebIDE serving end determines whether the specified file is opened in an existing window of the WebIDE instance; and if yes, performs step 806; otherwise, performs step 808.

Step 806: The WebIDE serving end sends first indication information to the browser, where the first indication information indicates the browser to pin the existing window (for example, denoted as a second window) on top and display the content of the specified file in the second window.

Step 807: The browser pins the second window on top, and displays the content of the specified file in the second window.

It should be understood that, a plurality of windows may be opened on one display, and the plurality of windows may be stacked. When one window is covered by another window, or a partial area of one window is blocked by another window, or a window is minimized, a bottom-layer window or the minimized window may be redisplayed in a manner of pinning on top. In addition, a plurality of files may be opened in a window, but a coding area of the window usually displays content of only one file.

Step 808: The WebIDE serving end sends second indication information to the browser, where the second indication information indicates the browser to open the specified file in a third window.

The third window may be a window selected by the WebIDE serving end, for example, the main window, a default window, a window of a previous operation performed by the user, a window that triggers a current operation, or a new child window. This is not specifically limited. For details, refer to related descriptions of the type (4) (the request is used to display the specified object and a window used to display the specified object is not specified) in step 207. Details are not described herein again. It should be noted that the third window may alternatively be the first window or the second window.

Step 809: The browser opens the specified file in the third window, and displays the content of the specified file in the third window.

Step 810: The WebIDE serving end updates a status of each changed window.

Optionally, the browser sends window status information to the WebIDE serving end, where the window status information indicates a change of each changed window (denoted as a changed window). The WebIDE serving end updates the status of each changed window based on the window status information.

According to the foregoing design, in this embodiment of this application, a plurality of windows of the WebIDE instance can be reused, a same file does not need to be repeatedly opened, and automatic jumping between windows can be implemented.

It should be noted that Embodiment 1 and Embodiment 2 are described by using a file as an example. The file in the two embodiments may alternatively be replaced with a function module. For example, a function module of the main window may be moved to a new child window. In this way, the user can split the function module or file of the main window to another window, and then drag different windows to different screens to implement multi-screen operations. Alternatively, a function module of the existing child window is moved out to the main window, a function module of an existing child window 1 is moved out to a new or existing child window 2, or the like. This is not specifically limited. In this way, the user can change the function module and file displayed in each window of the WebIDE instance.

### Embodiment 3:

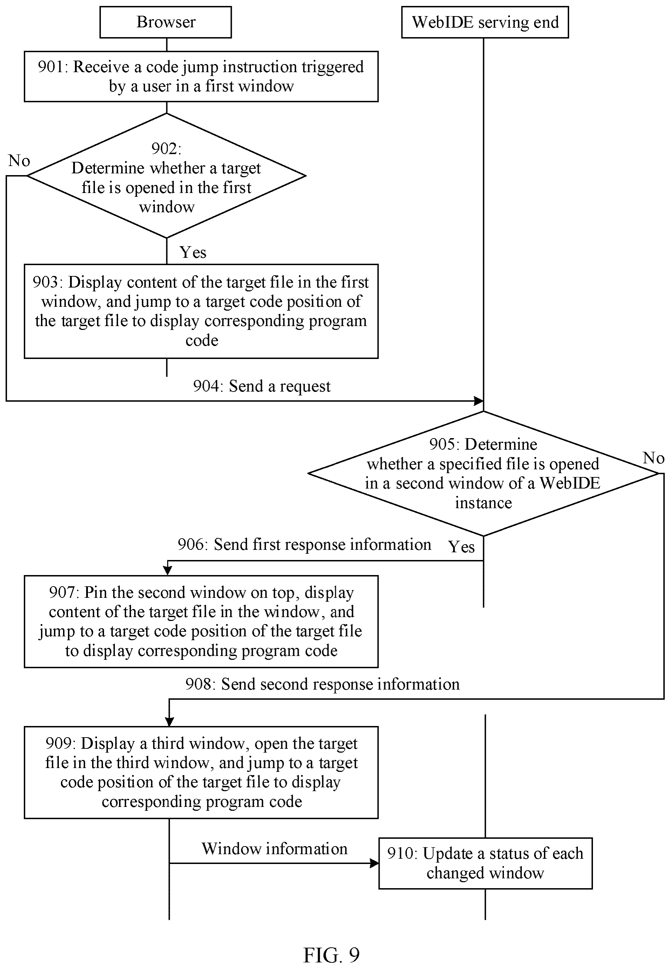

FIG. 9 is a schematic flowchart corresponding to Embodiment 3. As shown in FIG. 9, the procedure may include the following steps.

Step 901: A browser receives a code jump instruction triggered by a user in a first window (a main window or an existing child window of a WebIDE instance).

The code jump instruction indicates to jump from a current code position to a target code position. A code position may be identified by a file and a code address (for example, a segment number or a line number). A file to which current code belongs (denoted as a current file) and a file to which target code belongs (denoted as a target file) may be a same file or different files. It should be noted that, if the two files are a same file, code jump may be completed in a current window (for example, the first window), and a plurality of windows are not involved.

Step 902: The browser determines whether the target file is opened in the first window; and if yes, performs step 903; otherwise, performs step 904.

For a procedure in which the browser performs determining in step 902, refer to related descriptions of step 802. Details are not described herein again.

It should be noted that step 902 is an optional step, and is not necessarily performed. For example, in some cases, in this embodiment, step 902 may be skipped, and step 904 is directly performed. That is, a WebIDE serving end performs determining.

Step 903: The browser displays content of the target file in the first window, and jumps to the target code position of the target file to display corresponding program code.

Step 904: The browser sends a request to the WebIDE serving end, where the request is used to request to jump to the target code position.

Specifically, the request may include code jump related information. The code jump related information may include but is not limited to one or more of the following: an identifier of the first window (a window when the request is triggered), information about the target file, and the target code position.

Step 905: The WebIDE serving end determines whether the target file is opened in an existing window (assumed to be a second window) of the WebIDE instance, and if yes, performs step 906; otherwise, performs step 908.

The WebIDE serving end performs determining based on a status of each window of the WebIDE instance. The status of the window includes information such as a loaded function module and an opened file in the window. If opened files in a window include the target file, it is determined that the target file is opened in the window.

Step 906: The WebIDE serving end sends a first response message to the browser, where the first response message indicates the browser to pin the second window on top, display content of the target file in the second window, and jump to the target code position of the target file to display corresponding program code.

Step 907: After receiving the first response message, the browser pins the second window on top, displays the content of the target file in the second window, and jumps to the target code position of the target file to display the corresponding program code.

Step 908: The WebIDE serving end sends a second response message to the browser, where the second response message indicates the browser to open the target file in a third window and jump to the target code position of the target file to display the corresponding program code.

For the third window in step 908, refer to related descriptions of step 808. Details are not described herein again.

Step 909: After receiving the second response message, the browser displays the third window, opens the target file in the third window, and jumps to the target code position of the target file to display the corresponding program code.

Step 910: The WebIDE serving end updates a status of each changed window.

For step 910, refer to related descriptions of step 810. Details are not described herein again.

According to the foregoing design, in this embodiment of this application, a code jump is supported between a plurality of windows of the WebIDE instance. When the target file is opened in a window, automatic jumping of program code can be implemented, and the file does not need to be opened repeatedly. In addition, if the current file and the target file are not in one window, the user may drag the two windows to different screens, to implement multi-screen code reading and writing, or implement parallel viewing on one screen, to implement multi-window synchronous reading and writing, so that a case in which one WebIDE instance supports only one window, and a programming developer cannot edit one WebIDE instance in a plurality of windows can be avoided. According to this embodiment of this application, work efficiency of the programming developer can be greatly improved.

### Embodiment 4:

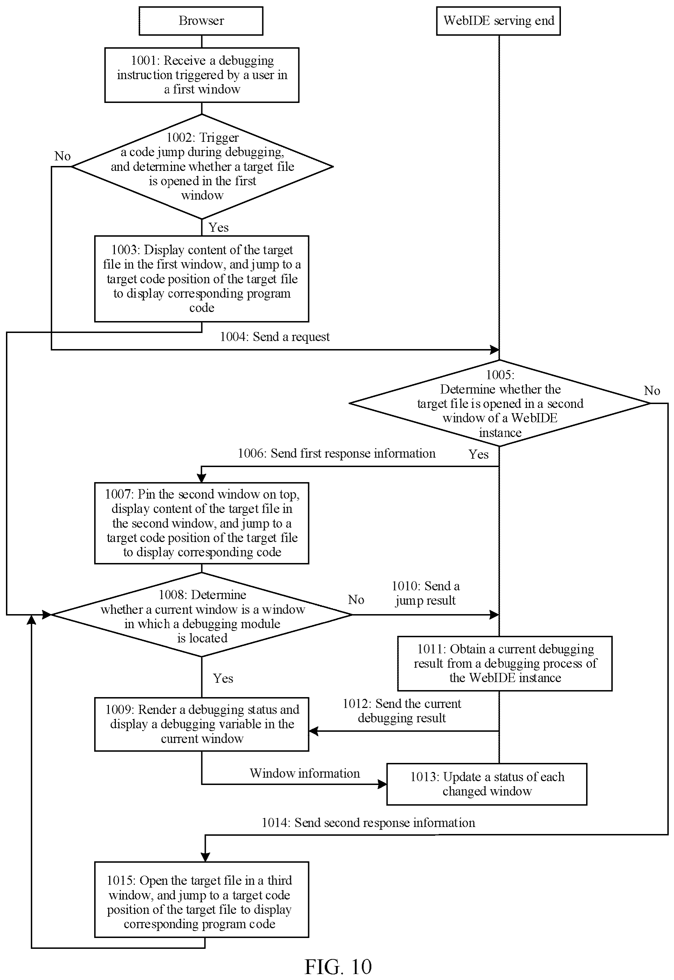

FIG. 10 is a schematic flowchart corresponding to Embodiment 4. As shown in FIG. 10, the procedure may include the following steps.

Step 1001: A browser receives a debugging instruction triggered by a user in a first window (a window in which a debugging module is located).

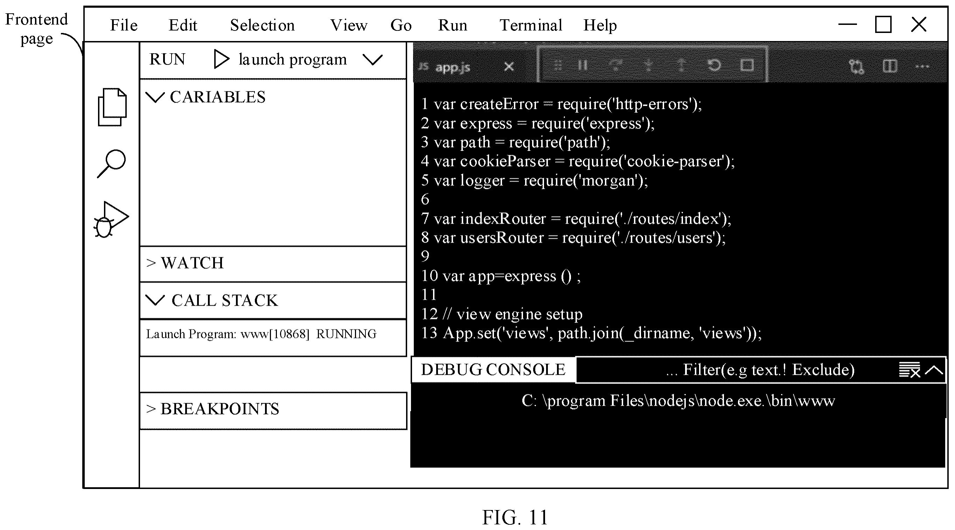

FIG. 11 is a diagram of a first window. As shown in FIG. 11, a user may trigger a debugging instruction in the window, for example, click a debugging key in a menu bar or click a debugging key in a debugging area, to start a debugging process. During debugging, a current debugging result is calculated by using the debugging process, and the current debugging result includes a debugging status of a program that is being debugged and values of all debugging variables.

The debugging result may be displayed in the debugging area. It should be understood that, during debugging, the debugging result constantly changes with a change of the debugged program.

Step 1002: When a code jump is triggered during debugging, the browser determines whether a target file is opened in the first window; and if yes, performs step 1003; otherwise, performs step 1004.

For a specific procedure in which the browser performs determining, refer to related descriptions of step 802. Details are not described herein again.

Step 1003: The browser jumps to a target code position in the first window to display corresponding program code.

With reference to FIG. 10, step 1008 is performed after step 1003. It should be noted that if step 1003 jumps to step 1008, the current window in step 1008 is the first window. If step 1007 jumps to step 1008, the current window in step 1008 is a second window.

Step 1004: The browser sends a request to a WebIDE serving end, where the request includes information related to the code jump, and is used to request to jump to target code.

Step 1005: The WebIDE serving end determines whether the target file is opened in an existing window (for example, denoted as the second window) of a WebIDE instance, and if yes, performs step 1006; otherwise, performs step 1014.

Step 1006: The WebIDE serving end sends a first response message for the request to the browser, where the first response message indicates the browser to pin the second window on top and jump to a target code position in the second window.

Step 1007: The browser pins the second window on top based on the first response message, displays content of the target file in the second window, and jumps to the target code position in the second window to display corresponding program code.

Step 1008: The browser determines whether a current window is the window (namely, the first window) in which the debugging module is located; and if yes, performs step 1009; otherwise, performs step 1010.

Step 1009: The browser renders a debugging status and displays a debugging variable in the current window.

Step 1010: The browser sends a jump result to the WebIDE serving end.

The jump result includes but is not limited to one or more of the following: information about the window in which the debugging module is located, information about a window in which the target file is located, information about the target file, the target code position, and the like.

Step 1011: The WebIDE serving end obtains a current debugging result from the debugging process of the WebIDE instance.

Step 1012: The WebIDE serving end sends the current debugging result to the browser, and indicates the browser to render the debugging status and display the debugging variable in the current window.

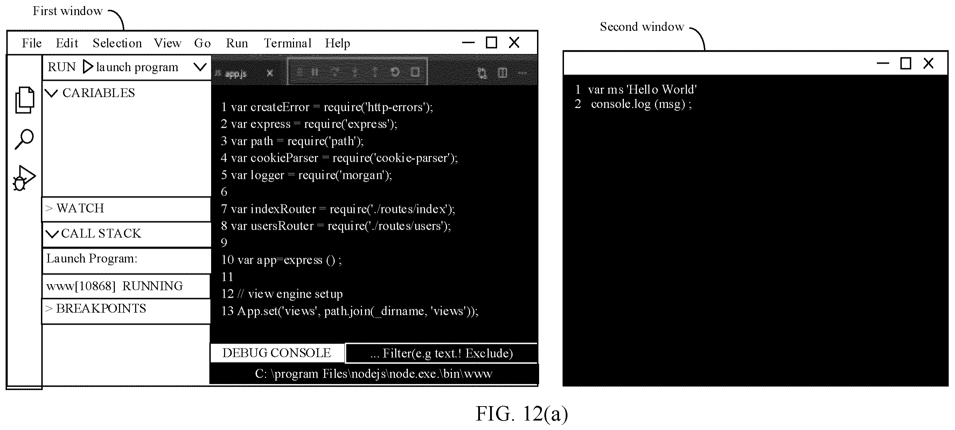

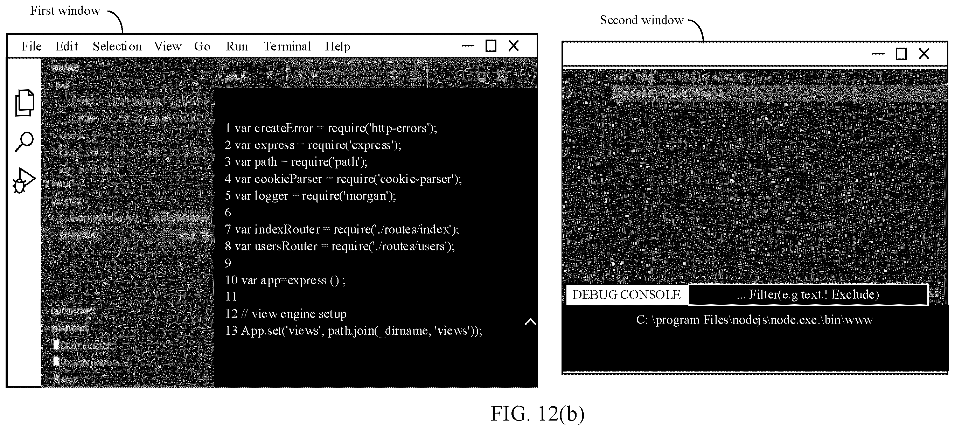

FIG. 12(a) and FIG. 12(b) are a diagram of a debugging process according to this embodiment of this application. As shown in FIG. 12(a), it is assumed that a current file is located in a main window (a window in which a debugging module is located), and a target file is located in a child window 1. When jumping from a current code position to a target code position is triggered in the debugging process, the target code position in the child window 1 is automatically jumped to, and a debugging status of program code corresponding to the target code position is rendered in the child window 1. As shown in FIG. 12(b), the program code corresponding to the target code position in the child window 1 is highlighted, a value of a related debugging variable at the program code corresponding to the target code position may be displayed, and a current debugging result may also be displayed in a debugging area of the main window.

Step 1013: The WebIDE serving end updates a status of each changed window.

For step 1013, refer to related descriptions of step 810. Details are not described herein again.

Step 1014: The WebIDE serving end sends a second response message to the browser, where the second response message indicates the browser to open the target file in a specified window (for example, denoted as a third window) and jump to the target code position of the target file to display corresponding program code.

For the third window in step 1014, refer to related descriptions of step 808. Details are not described herein again.

Step 1015: The browser opens the target file in the third window based on the second response message, and jumps to the target code position of the target file to display the corresponding program code.

It should be noted that step 1008 to step 1013 further need to be performed after step 1015. It should be noted that, if step 1003 jumps to step 1012, the current window in step 1008 to step 1012 is the first window. If step 1007 jumps to step 1012, the current window in step 1008 to step 1012 is the second window. If step 1015 jumps to step 1012, the current window in step 1008 to step 1012 is the third window.

According to the foregoing design, in this embodiment of this application, a plurality of windows of the WebIDE instance can cooperate with each other to perform code debugging. During debugging, the target code can be automatically jumped to, the corresponding debugging status can be rendered, and the debugging result can be displayed. In addition, if the current file and the target file are not in one window, the user may drag the two windows to different screens, to implement multi-screen code reading, or implement parallel viewing on one screen, to implement multi-window synchronous reading, so that a case in which one WebIDE instance supports only one window, and a programming developer cannot view a complete debugging process of one WebIDE instance in a plurality of windows can be avoided. According to this embodiment of this application, work efficiency of the programming developer can be greatly improved.

It should be noted that, in Embodiment 1 to Embodiment 4, the first window may be a main window, and the second window may be a child window; or the first window is a child window, and the second window is a main window; or the first window is a child window, and the second window is another child window. This is not specifically limited.

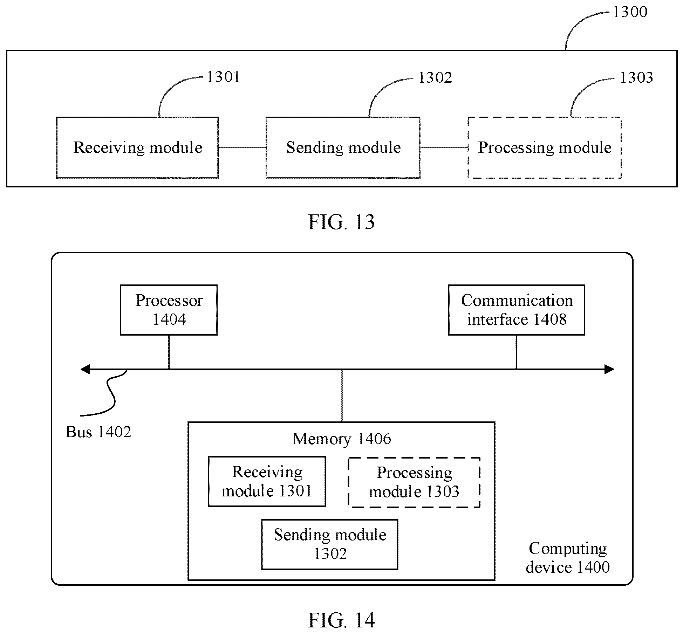

Based on a same invention concept as the method embodiments, an embodiment of this application further provides a WebIDE serving end 1300. The WebIDE serving end is configured to perform the method performed by the WebIDE serving end in the method embodiment in FIG. 2, FIG. 7, FIG. 8, FIG. 9, or FIG. 10. As shown in FIG. 13, the WebIDE serving end 1300 includes a receiving module 1301 and a sending module 1302. Optionally, the WebIDE serving end may further include a processing module 1303. Specifically, in the WebIDE serving end 1300, a connection is established between the modules through a communication path.

The receiving module 1301 is configured to receive a first request from a web client, where the first request is triggered by a user in a first window of a WebIDE instance displayed on the web client, and is used to request to display specified content of the WebIDE instance. For details, refer to the description of step 206 in the method embodiment in FIG. 2, or refer to the description of step 702 in the method embodiment in FIG. 7, or refer to the description of step 804 in the method embodiment in FIG. 8, or refer to the description of step 904 in the method embodiment in FIG. 9, or refer to the description of step 1004 in the method embodiment in FIG. 10. Details are not described herein again.

The sending module 1302 is configured to send a response message for the first request to the web client, where the response message indicates the web client to display the specified content in a second window of the WebIDE instance, and the first window and the second window are used to display a frontend page corresponding to the WebIDE instance. For details, refer to the description of step 207 in the method embodiment in FIG. 2, or refer to the description of step 704 in the method embodiment in FIG. 7, or refer to the description of step 707 in the method embodiment in FIG. 7, or refer to the description of step 806 in the method embodiment in FIG. 8, or refer to the description of step 908 in the method embodiment in FIG. 9, or refer to the description of step 1014 in the method embodiment in FIG. 10. Details are not described herein again.

In a possible implementation, before receiving the first request from the web client, the receiving module 1301 is further configured to receive a second request from the web client, where the second request is used to request to create the WebIDE instance. For details, refer to the description of step 201 in the method embodiment in FIG. 2. Details are not described herein again.

The sending module 1302 is further configured to send, to the web client, resource information required for displaying the frontend page corresponding to the WebIDE instance. For details, refer to the description of step 202 in the method embodiment in FIG. 2. Details are not described herein again.

In a possible implementation, an object to which the specified content belongs includes: at least one function module included in the frontend page corresponding to the WebIDE instance, and/or at least one project file loaded in the WebIDE instance, where each project file includes program code.

In a possible implementation, the apparatus includes a status of any window included in the WebIDE instance, and a status of each window includes at least one of an identifier of the window, a level of the window, a function module included in the window, and information about a file opened in the window.

The receiving module 1301 is further configured to receive window status information from the web client, where the window status information indicates to display a change of content displayed in each of one or more windows.

The processing module 1303 updates a status of each of the one or more windows based on the window status information. For details, refer to the description of step 210 in the method embodiment in FIG. 2, or refer to the description of step 706 in the method embodiment in FIG. 7, or refer to the description of step 709 in the method embodiment in FIG. 7, or refer to the description of step 810 in the method embodiment in FIG. 8, or refer to the description of step 910 in the method embodiment in FIG. 9, or refer to the description of step 1013 in the method embodiment in FIG. 10. Details are not described herein again.

For example, the following uses the processing module 1303 in the WebIDE serving end 1300 as an example to describe an implementation of the processing module 1303. Similarly, for implementations of the receiving module 1301 and the sending module 1302, refer to the implementation of the processing module 1303.

When the processing module 1303 is implemented by using software, the processing module 1303 may be an application or a code block that runs on a computer device. The computer device may be at least one of computing devices such as a physical host, a virtual machine, and a container. Further, there may be one or more computer devices. For example, the processing module 1303 may be an application that runs on a plurality of hosts/virtual machines/containers. It should be noted that the plurality of hosts/virtual machines/containers configured to run the application may be distributed in a same availability zone (availability zone, AZ), or may be distributed in different AZs. The plurality of hosts/virtual machines/containers configured to run the application may be distributed in a same region (region) or may be distributed in different regions. Usually, one region may include a plurality of AZs.

Similarly, the plurality of hosts/virtual machines/containers configured to run the application may be distributed in a same virtual private cloud (virtual private cloud, VPC), or may be distributed in a plurality of VPCs. Generally, one region may include a plurality of VPCs, and one VPC may include a plurality of AZs.

When the processing module 1303 is implemented by using hardware, the processing module 1303 may include at least one computing device, for example, a server. Alternatively, the processing module 1303 may be a device implemented by using an application-specific integrated circuit (application-specific integrated circuit, ASIC) or a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), or any combination thereof.

The plurality of computing devices included in the processing module 1303 may be distributed in a same AZ, or may be distributed in different AZs. The plurality of computing devices included in the processing module 1303 may be distributed in a same region, or may be distributed in different regions. Similarly, the plurality of computing devices included in the processing module 1303 may be distributed in a same VPC, or may be distributed in a plurality of VPCs. The plurality of computing devices may be any combination of computing devices such as a server, an ASIC, a PLD, a CPLD, an FPGA, and GAL.

It should be noted that, in embodiments of this application, module division is an example, and is merely a logical function division. During actual implementation, another division manner may be used. Function modules in embodiments of this application may be integrated into one module, or each of the modules may exist alone physically, or two or more modules may be integrated into one module. For example, the receiving module 1301 and the sending module 1302 are integrated into one module, or the receiving module 1301 and the processing module 1303 are a same module. The integrated unit may be implemented in a form of hardware, or may be implemented in a form of a software function unit.

This application further provides a computing device 1400. As shown in FIG. 14, the computing device 1400 includes a bus 1402, a processor 1404, a memory 1406, and a communication interface 1408. The processor 1404, the memory 1406, and the communication interface 1408 communicate with each other through the bus 1402. The computing device 1400 may be a server or a terminal device. It should be understood that quantities of processors and memories in the computing device 1400 are not limited in this application.

The bus 1402 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used in FIG. 14 for representation, but it does not indicate that there is only one bus or only one type of bus. The bus 1402 may include a channel for transferring information between various components (for example, the memory 1406, the processor 1404, and the communication interface 1408) of the computing device 1400.

The processor 1404 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1406 may include a volatile memory (volatile memory), for example, a random access memory (random access memory, RAM). The memory 1406 may further include a nonvolatile memory (nonvolatile memory), for example, a read-only memory (read-only memory, ROM), a flash memory, a hard disk drive (hard disk drive, HDD), or a solid state drive (solid state drive, SSD).

The memory 1406 stores executable program code, and the processor 1404 executes the executable program code to separately implement functions of the receiving module 1301, the sending module 1302, and the processing module 1303, to implement the WebIDE instance management method. In other words, the memory 1406 stores instructions used by the WebIDE serving end 1300 to perform the WebIDE instance management method provided in this application.

The communication interface 1408 uses, for example but not limited to, a network interface card, or a transceiver module like a transceiver, to implement communication between the computing device 1400 and another device or a communication network.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

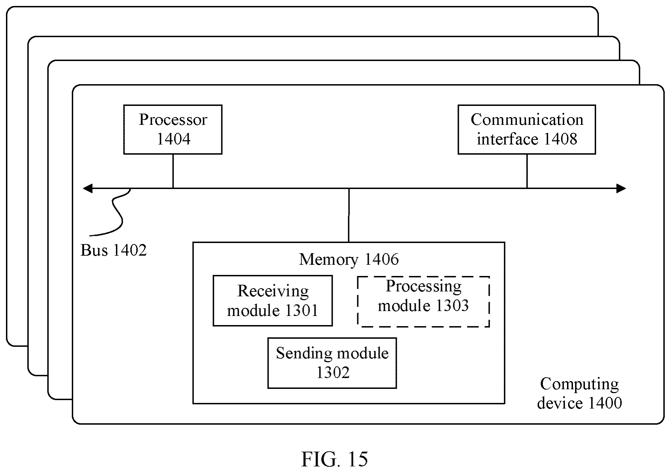

As shown in FIG. 15, the computing device cluster includes at least one computing device 1400. The memory 1406 in one or more computing devices 1400 in the computing device cluster may store same instructions for performing the WebIDE instance management method.

In some possible implementations, the memory 1406 in the one or more computing devices 1400 in the computing device cluster may alternatively separately store some instructions for performing the WebIDE instance management method. In other words, a combination of one or more computing devices 1400 may jointly execute the instructions for performing the WebIDE instance management method.

It should be noted that memories 1406 in different computing devices 1400 in the computing device cluster may store different instructions, and are respectively used to perform some functions of a computing apparatus. In other words, the instructions stored in the memories 1406 in the different computing devices 1400 may implement functions of one or more of the receiving module 1301, the sending module 1302, and the processing module 1303.

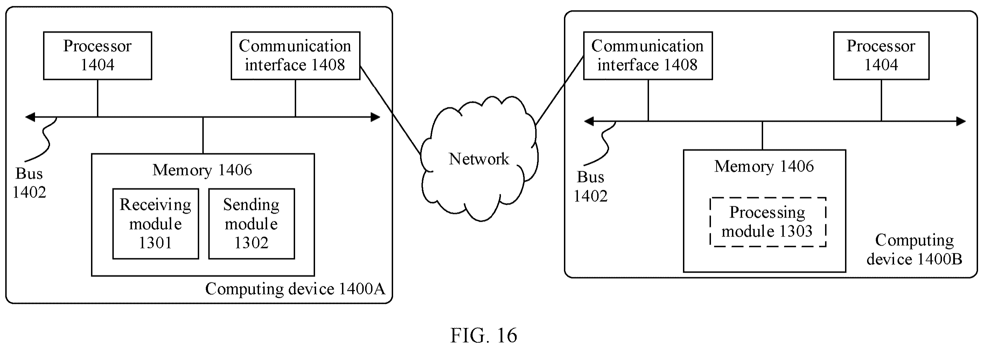

In some possible implementations, the one or more computing devices in the computing device cluster may be connected through a network. The network may be a wide area network, a local area network, or the like. FIG. 16 shows a possible implementation. As shown in FIG. 16, two computing devices 1400A and 1400B are connected through a network. Specifically, each computing device is connected to the network through a communication interface in the computing device. In this type of possible implementation, the memory 1406 in the computing device 1400A stores instructions for performing functions of the receiving module 1301 and the sending module 1302. In addition, the memory 1406 in the computing device 1400B stores instructions for performing a function of the processing module 1303.

It should be understood that a function of the computing device 1400A shown in FIG. 16 may alternatively be completed by a plurality of computing devices 1400. Similarly, a function of the computing device 1400B may also be completed by the plurality of computing devices 1400.

An embodiment of this application further provides another computing device cluster. For a connection relationship between computing devices in the computing device cluster, refer to the similar connection manner in the computing device cluster in FIG. 15 and FIG. 16. A difference lies in that the memory 1406 in one or more computing devices 1400 in the computing device cluster may store same instructions for performing the WebIDE instance management method.

In some possible implementations, the memory 1406 in the one or more computing devices 1400 in the computing device cluster may alternatively separately store some instructions for performing the WebIDE instance management method. In other words, a combination of one or more computing devices 1400 may jointly execute the instructions for performing the WebIDE instance management method.

An embodiment of this application further provides a computer program product including instructions. The computer program product may be software or a program product that includes instructions and that can be run on a computing device or stored in any usable medium. When the computer program product runs on at least one computing device, the at least one computing device is caused to perform a resource management method.

An embodiment of this application further provides a computer-readable storage medium. The computer-readable storage medium may be any usable medium accessible by a computing device, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions. The instructions indicate a computing device to perform a resource management method.

Optionally, the computer-executable instructions in this embodiment of this application may also be referred to as application program code. This is not specifically limited in embodiments of this application.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that persons skilled in the art can make various modifications and variations to this application without departing from the spirit and scope of this application. This application is intended to cover these modifications and variations of this application provided that these modifications and variations fall within the scope of protection defined by the following claims of this application and their equivalent technologies.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A WebIDE instance management method, wherein the method is applied to a system comprising a web client and a web integrity develop environment WebIDE serving end, the WebIDE serving end is configured to provide a service for a WebIDE instance, the web client is configured to display, through one or more windows, a frontend page corresponding to the WebIDE instance, and the method comprises:
sending, by the web client, a request to the WebIDE serving end in response to a preset operation triggered by a user for a specified object in a first window of the WebIDE instance, wherein the request is used to request to display the specified object in a manner indicated by the preset operation;
after receiving the request, sending, by the WebIDE serving end, a response message for the request to the client, wherein the response message indicates to display the specified object in a second window of the WebIDE instance; and
displaying, by the web client, the second window based on the response message, and displaying the specified object in the second window.

2. The method according to claim 1, wherein the specified object comprises at least one function module comprised in the frontend page corresponding to the WebIDE instance, and/or at least one file loaded in the WebIDE instance.

3. The method according to claim 1 or 2, wherein the preset operation comprises:
dragging the specified object displayed in the first window to a blank area outside the first window or to the second window; inputting or selecting a specified command in the first window, wherein the specified command indicates to display the specified object in the second window; or a specified shortcut key operation, wherein the shortcut key operation indicates to display the specified object in the second window, wherein
the request is used to request to call the second window to display the specified object, and the second window is an existing window or a new window of the WebIDE instance.

4. The method according to claim 1 or 2, wherein if the preset operation does not specify a window to display the specified object,
before sending, by the WebIDE serving end, the response message for the request to the web client, the method further comprises:
determining, by the WebIDE serving end based on window status information of the WebIDE instance, that the specified object is opened in the second window, or that the specified object is not opened in the first window, wherein
the window status information of the WebIDE instance comprises a status of each of one or more windows of the WebIDE instance, and a status of a window comprises at least one of an identifier of the window, a level of the window, a function module comprised in the window, and information about a file opened in the window.

5. The method according to claim 4, wherein the preset operation is used to open a specified file, and the request is used to request to open the specified file; or
the preset operation comprises triggering a code jump instruction in the first window, and the request is used to request to jump to a target code position of a specified file indicated by the code jump instruction.

6. The method according to claim 5, wherein the code jump instruction is generated during code debugging; and
the method further comprises:
sending, by the WebIDE serving end, indication information to the web client, wherein the indication information indicates to display, in the second window, a debugging result corresponding to running to target code, and the target code is program code corresponding to the target code position.

7. The method according to any one of claims 4 to 6, wherein after displaying, by the web client, the specified object in the second window, the method further comprises:
updating, by the WebIDE serving end, a status of the second window.

8. A WebIDE instance management method, wherein the method is applied to a WebIDE serving end, the WebIDE serving end is communicatively connected to a web client, the WebIDE serving end is configured to provide a service for a WebIDE instance, the web client is configured to display, through one or more windows, a frontend page corresponding to the WebIDE instance, and the method comprises:
receiving a request from the web client, wherein the request is triggered by a user in a first window of the WebIDE instance displayed on the web client, and is used to request to display, as indicated, a specified object of the WebIDE instance; and
sending a response message for the request to the web client, wherein the response message indicates the web client to display the specified object in a second window of the WebIDE instance.

9. The method according to claim 8, wherein the specified object comprises at least one function module comprised in the frontend page corresponding to the WebIDE instance, and/or at least one file loaded in the WebIDE instance.

10. The method according to claim 8 or 9, wherein if the request does not specify a window to display the specified object,
before sending, by the WebIDE serving end, the response message for the request to the web client, the method further comprises:
determining, by the WebIDE serving end based on window status information of the WebIDE instance, that the specified object is opened in the second window, or that the specified object is not opened in the first window, wherein
the window status information of the WebIDE instance comprises a status of each of one or more windows of the WebIDE instance, and a status of a window comprises at least one of an identifier of the window, a level of the window, a function module comprised in the window, and information about a file opened in the window.

11. The method according to claim 10, wherein the method further comprises:
updating, by the WebIDE serving end, a status of the second window.

12. A WebIDE instance management apparatus, wherein the apparatus comprises:
a receiving module, configured to receive a request from the web client, wherein the request is triggered by a user in a first window of the WebIDE instance displayed on the web client, and is used to request to display, as indicated, a specified object of the WebIDE instance; and
a sending module, configured to send a response message for the request to the web client, wherein the response message indicates the web client to display the specified object in a second window of the WebIDE instance.

13. The apparatus according to claim 12, wherein the specified object comprises: at least one function module comprised in a frontend page corresponding to the WebIDE instance, and/or at least one file loaded in the WebIDE instance.

14. The apparatus according to claim 12 or 13, wherein the apparatus further comprises a determining module; and
if the request does not specify a window to display the specified object, before the sending module sends the response message for the request to the web client, the determining module is further configured to:
determine, based on window status information of the WebIDE instance, that the specified object is opened in the second window, or that the specified object is not opened in the first window, wherein
the window status information of the WebIDE instance comprises a status of each of one or more windows of the WebIDE instance, and a status of a window comprises at least one of an identifier of the window, a level of the window, a function module comprised in the window, and information about a file opened in the window.

15. The apparatus according to any one of claim 14, wherein the apparatus further comprises an updating module; and
the updating module is configured to update a status of the second window of the WebIDE instance.

16. A WebIDE instance management system, wherein the system comprises a web client and a web integrity develop environment WebIDE serving end, wherein
the web client is configured to perform the method performed by the web client according to any one of claims 1 to 7; and
the WebIDE serving end is configured to perform the method performed by the WebIDE serving end according to any one of claims 1 to 7.

17. A computing device cluster, comprising at least one computing device, wherein each computing device comprises a processor and a memory; and
a processor of the at least one computing device is configured to execute instructions stored in a memory of the at least one computing device, to cause the computing device cluster to perform the method performed by the WebIDE serving end according to any one of claims 1 to 7, or perform the method according to any one of claims 8 to 11.

18. A computer program product comprising instructions, wherein when the instructions are run by a computing device cluster, the computing device cluster is caused to perform the method performed by the WebIDE serving end according to any one of claims 1 to 7, or perform the method according to any one of claims 8 to 11.

19. A computer-readable storage medium, comprising computer program instructions, wherein when the computer program instructions are executed by a computing device cluster, the computing device cluster is caused to perform the method performed by the WebIDE serving end according to any one of claims 1 to 7, or perform the method according to any one of claims 8 to 11.
